# EUROPÄISCHE PATENTSCHRIFT

(11) **EP 2 923 940 B1**
(45) Veröffentlichungstag und Bekanntmachung des Hinweises auf die Patenterteilung: **20.09.2017**
(21) Anmeldenummer: 15157513.1
(22) Anmeldetag: 04.03.2015
(51) Int. Cl.: B62M 9/10

(54) **Fahrrad-Kettenschaltung**
Bicycle chain switching
Dérailleur de bicyclette

(30) Priorität: 26.03.2014 DE 102014205649
(43) Veröffentlichungstag der Anmeldung: 30.09.2015
(73) Patentinhaber: Ruesch, Werner, 82234 Wessling (DE)
(72) Erfinder: Ruesch, Werner, 82234 Wessling (DE)
(74) Vertreter: Patentanwälte Geyer, Fehners & Partner mbB

(56) Entgegenhaltungen:
- DE-A1-102011 102 767
- DE-A1-102011 102 794
- Anonymous: "René Herse Triple Crank", Compass Bicycles , XP002742479, Gefunden im Internet: URL:https://www.compasscycle.com/shop/cran ks/rene-herse-triple-crank/ [gefunden am 2015-07-20]
- Anonymous: "René Herse Cranks Sold Out", Jan Heine wordpress , 18. Juni 2012 (2012-06-18), XP002742480, Gefunden im Internet: URL:https://janheine.wordpress.com/2012/06 /18/rene-herse-cranks-sold-out/ [gefunden am 2015-07-20]
- Anonymous: "DURA-ACE Cassette Sprocket", Media Canyon , 1. Juli 2012 (2012-07-01), XP055203388, Gefunden im Internet: URL:https://media.canyon.com/download/manu als/CS_9000.pdf [gefunden am 2015-07-20]
- Anonymous: "Crankset FC-RS500 SM-BB4600", Si Shimano Com. , 1. Juli 2014 (2014-07-01), XP055203376, Gefunden im Internet: URL:http://si.shimano.com/php/download.php ?file=pdf/ev/EV-FC-RS500-3679.pdf [gefunden am 2015-07-20]

## Beschreibung

Die Erfindung bezieht sich auf eine Fahrrad-Kettenschaltung zur Kraftübertragung zwischen Tretkurbel und Hinterrad eines Fahrrades mit stufenweise einstellbarem Übersetzungsverhältnis, wobei die Kettenschaltung ein Ritzelpaket für das Hinterrad und ein Getriebe zur stufenweisen Verstellung des Übersetzungsverhältnisses umfasst.

Für Fahrräder sind Kettenschaltungen sehr gebräuchlich. Sie erlauben einen wechselnden Eingriff der Fahrradkette in mit verschiedenen Zahnzahlen versehenen Ritzeln an einem Ritzelpaket des Hinterrades. Zur Vergrößerung des Übersetzungsbereiches ist auch oftmals zusätzlich ein für die Tretkurbel wirkendes Getriebe zur weiteren stufenweisen Verstellung des Übersetzungsverhältnisses vorgesehen, meist in Form eines Kettenblattpaketes an der Tretkurbel. Aber auch eine zusätzliche Nabenschaltung im Hinterrad oder eine Tretlagerschaltung sind als für die Tretkurbel wirkendes Getriebe möglich. Das für die Tretkurbel wirkende Getriebe zur stufenweisen Verstellung des Übersetzungsverhältnisses erreicht in Kombination mit dem Ritzelpaket einen großen Übersetzungsbereich. Die Ritzel des Ritzelpaketes sind nebeneinander an der Hinterradnabe angeordnet. Ist das für die Tretkurbel wirkende Getriebe zur stufenweisen Verstellung des Übersetzungsverhältnisses als Kettenblattpaket an der Tretkurbel angeordnet, wird die Kette zwischen den Ritzeln und den Kettenblättern quer verschoben, an der Hinterachse mit einem Schaltwerk und an der Tretkurbel mit einem Umwerfer. Das Schaltwerk dient zugleich als Kettenspanner. Es sind Ritzelpakete mit bis zu elf, typischerweise sieben bis zehn Ritzeln gebräuchlich.

Aus den Veröffentlichungen "René Herse Triple Crank", XP002742479, gefunden im Internet unter https://www.compasscycle.com/shop/cranks/rene-herse-triple-crank/ am 20.07.2015, sowie der Veröffentlichung "René Herse Triple Cranks Sold Out", XP002742480, gefunden im Internet unter https://janheine.wordpress.com/2012/06/18/rene-herse-cranks-sold-out/ am 20.07.2015 sind Getriebe zur stufenweisen Verstellung des Übersetzungsverhältnisses in Form von Kettenblattpaketen mit zwei oder drei Kettenblättern bekannt.

Die Veröffentlichung "DURA-ACE Cassette Sprocket", XP055203388, gefunden im Internet unter https://media.canyon.com/download/manuals/CS_9000.pdf am 20.07.2015 offenbart ein Ritzelpaket, das modular aufgebaut ist, und in verschiedenen Kombinationen zusammengestellt werden kann.

Bei drei Kettenblättern vorne und elf Ritzeln hinten wären theoretisch 33 Gänge schaltbar. Ein Teil der Kombinationen ist jedoch nicht praktisch nutzbar, da bei ihnen die Kette besonders schräg liefe, was zum Verschleiß, reduzierten Wirkungsgrad und Geräuschentwicklungen führt. Die Zahl der fahrbaren Gänge liegt bei drei Kettenblättern und zehn Ritzeln, wenn große Ritzel (z. B. bis 28 Zähnen) verwendet werden, unter dem Produkt aus Kettenblattanzahl und Ritzelanzahl, da die größten Ritzel nicht mit dem großen Kettenblatt und die kleinsten Ritzel nicht dem kleinen Kettenblatt kombiniert werden sollen. Außerdem ist die als Entfaltung bezeichnete Übersetzung für einige Gänge nahezu identisch.

Der Erfindung liegt die Aufgabe zugrunde, eine Fahrrad-Kettenschaltung der genannten Art dahingehend weiterzubilden, dass sie einfacher aufgebaut ist, eine möglichst gleichmäßige Abstufung der Gänge hat und ein einfacher Betrieb erreicht ist.

Diese Aufgabe wird gelöst mit einer Fahrrad-Kettenschaltung zur Kraftübertragung zwischen Tretkurbel und Hinterrad eines Fahrrades mit stufenweise einstellbarem Übersetzungsverhältnis, wobei die Kettenschaltung ein Ritzelpaket für das Hinterrad und ein für die Tretkurbel wirkendes Getriebe zur stufenweisen Verstellung des Übersetzungsverhältnisses umfasst, wobei das Ritzelpaket mindestens sechs Ritzel aufweist, wobei alle Ritzel des Ritzelpakets in einer Einzahnabstufung vorgesehen sind, und das für die Tretkurbel wirkendes Getriebe eine erste, eine zweite und eine dritte Stufe aufweist, die zueinander eine Reduktion auf 2/3 ± 7% bewirken.

Die Erfindung kombiniert zwei Merkmale, nämlich ein Ritzelpaket, in dem alle Ritzel in einer Einzahnabstufung vorgesehen sind, und ein für die Tretkurbel wirkendes Getriebe zur stufenweisen Verstellung des Übersetzungsverhältnisses mit einem Verhältnis zwischen den Stufen des Getriebes von 1 : 2/3. Das Verhältnis von 1 : 2/3 gilt zwischen allen Stufen des Getriebes. Dieses Getriebe kann, wie bereits erwähnt, eine Tretlagerschaltung oder eine Nabenschaltung sein. Besonders bevorzugt ist die Ausgestaltung als mit der Tretkurbel verbundenes Kettenblatt. Bei dieser Ausgestaltung kann möglicherweise das Verhältnis von 1 : 2/3 nicht genau eingestellt werden, je nach Zähnezahl der Kettenblätter. Da die Zähnezahl immer ganzzahlig ist, treten immer Rundungseffekte auf. Für das Verhältnis von 1 : 2/3 ist deshalb eine Abweichung von max. ± 7% zulässig. Bei bevorzugten Kettenblättern bedeutet eine Rundung auf das nächste ganzzahlige Verhältnis eine Abweichung von max. 3% gegenüber 1 : 2/3. Bevorzugt ist deshalb eine Abweichung von max. ± 3%. Dies entspricht dann einer Abweichung von ± 1 Zahn an einem Kettenblatt.

Die Erfindung erzielt ein rennradtaugliches Antriebssystem, das zugleich auch für Freizeitradfahrer geeignet ist. Es hat einen sehr großen Entfaltungsbereich. Zusätzlich kann die Lage des Entfaltungsbereiches durch die entsprechende Wahl des Ritzelpakets, also die Wahl eines kleinsten Ritzels mit 11, 12 oder 13 oder mehr Zähnen, linear verschoben werden. Diese Art der Abstimmung ist für einen Freizeitradfahrer sehr einfach. Die Schaltsystematik ist durch das Fehlen oder zumindest das Minimieren von Überlagerungen im Entfaltungsbereich leicht verständlich und gut bedienbar. Somit können auch Benutzer mit geringem technischen Verständnis und Ansprüchen damit gut zurechtkommen. Der Ausgleich zwischen Vortrieb und Frequenz ist leicht einstellbar, da das Übersetzungsverhältnis zwischen Kurbel und Hinterrad gut gewählt werden kann. Somit ist erreicht, dass weder zu viel noch zu wenig Kraft und weder zu viel noch zu wenig Weg beim Fahrradfahren entsteht.

Die erfindungsgemäße Schaltung hat keine oder erheblich reduzierte Gangdopplungen. Das zur Verfügung stehende Material wird somit optimal ausgenutzt, und die Gangwahl ist sehr einfach.

Die erfindungsgemäße Kettenschaltung kann weitgehend mit Standardkomponenten realisiert werden. 6-fach bis 11-fach Ritzelpakete können mit einem indexierten Schaltwerk verwendet werden, das 7, 8, 9, 10 oder 11 Indexstufen hat. Es ist insbesondere bevorzugt, ein indexiertes Schaltwerk zu verwenden, dessen Zahl der Indexstufen größer ist als die Zahl der Ritzel im Ritzelpaket. Auf diese Weise kann mit einem schmalen Ritzelpaket gearbeitet werden, da übliche 10- oder 11-fach Schaltwerke auf einen geringeren Abstand der Ritzel im Ritzelpaket ausgelegt sind (typ. 3.8, 4.0 oder 4.4 mm), als 6- oder 7-fach Schaltwerke. Es wird also bewusst der maximale Verstellweg, zu dem das Schaltwerk möglich wäre, nicht ausgeschöpft, um den Vorteil einer kompakten Bauweise des Ritzelpaketes zu erreichen.

Die Abstimmung von Kettenschaltungen ist seit der Entwicklung dieser Schaltungstechnik ein wichtiges Thema. Man ging im Stand der Technik davon aus, dass die Entwicklung dieser Schalttechnik ausgeschöpft ist. Der Stand der Technik ging deshalb in letzter Zeit zu aufwendigen anderen Schalttechniken über, beispielsweise Nabenschaltungen mit zehn oder mehr Gängen, oder setzt Elektronik ein, um die Ansteuerung von Umwerfern und Schaltwerken bei einer herkömmlichen Kettenschaltung zu erleichtern. Die Erfindung benötigt diesen Aufwand nicht, da sie es durch eine überraschend einfache Kombination von Ritzelpaket mit Einzahnabstufung und zusätzlichem Getriebe (in der Regel einem Kettenblattpaket) in der Abstimmung 1 : 2/3 : 4/9 erreicht, dass beim Durchschalten der Gänge die einzelnen Ritzel des Ritzelpaketes auf dem jeweiligen Getriebegang (in der Regel dem jeweiligen Kettenblatt) vollständig abgefahren werden können, bevor durch Einlegen des nächsten Getriebegangs (in der Regel nächsten Kettenblattes) der Durchlauf durch die Ritzel des Ritzelpaketes erneut beginnt. Um zwischen den Gängen des Getriebes (in der Regel zwischen den Kettenblättern des Kettenblattpaketes) eine gleichmäßige Abstufung zu erreichen, sind mindestens sechs Ritzel im Ritzelpaket erforderlich. Mit der vorgegebenen Getriebeabstufung, bei der jede Stufe gegenüber der vorhergehende eine Reduktion auf 2/3 bewirkt, gleicht der Übergang zwischen unterschiedlichen Getriebestufen dem Unterschied zwischen den Stufen benachbarter Ritzel des Ritzelpakets besonders dann weitgehend, wenn das kleinste Ritzel eine Zahl von elf Zähnen hat.

Durch das Getriebe mit drei Stufen erhält man einen Entfaltungsbereich, der herkömmlichen Kettenschaltungen, die durch Mehrzahnabstände eine sehr große Spreizung im Ritzelpaket haben, mindestens gleicht. Zugleich entfällt die verschachtelte Schaltweise, die im Stand der Technik erforderlich ist. Auch vermeidet die Erfindung über den Schaltbereich verteilte Sprünge in der Entfaltung, die bei den bekannten Kombinationen von Kettenblattpaketen und Ritzelpaketen auftreten. Schließlich ist eine Dopplung von Gängen, d. h. Kombinationen aus Ritzeln und Kettenblättern, die nahezu identische Entfaltung haben, vermieden.

Somit wird durch eine überraschend einfache Maßnahme eine vorteilhafte Weiterbildung eines Kettenschaltungssystems erreicht, das man eigentlich am Ende der Entwicklung angekommen glaubte.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine Schemadarstellung einer Kettenschaltung,
- Fig. 2(a) - (e): Entfaltungsdiagramme zur Verdeutlichung des Zusammenspiels von Ritzelpaket und Kettenblattpaket bei der Kettenschaltung der Fig. 1,
- Fig. 3(a) - (e): eine Darstellung ähnlich der Fig. 2(a) - (e),
- Fig. 4(a) - (e): eine weitere Darstellung ähnlich der Fig. 2(a) - (e),
- Fig. 5(a) - (b): Darstellungen entsprechend den Fig. 2(d) und 3(d) für Kettenblattpakete, die innerhalb der erfindungsgemäßen Toleranz um bis zu zwei Zähne abweichen, um weniger sportlicheren Fahrern entgegenzukommen,
- Fig. 6(a) - (d): eine Darstellung ähnlich der Fig. 2(a) - (e) für eine Kettenschaltung mit einem Ritzelpaket mit sieben Ritzeln,
- Fig. 7(a) - (d) und 8(a) - (d): Darstellungen ähnlich denen der Fig. 6(a) - (d),
- Fig. 9(a) - (c): Darstellungen entsprechend den Fig. 2(d), 3(d) und 4(d) für eine Kettenschaltung mit einem Ritzelpaket mit zehn Ritzeln,
- Fig. 10: ein Vergleich der Entfaltung für die erfindungsgemäße Kettenschaltung gegenüber einer Kettenschaltung nach dem Stand der Technik,
- Fig. 11(a) - (b): eine Darstellung des Entfaltungsbereiches für eine Kettenschaltung gemäß der Erfindung und eine Kettenschaltung nach dem Stand der Technik,
- Fig. 12: die Aufstellung der Übersetzungsverhältnisse für eine Kettenschaltung mit verschiedener Wahl des kleinsten Ritzels bei einem Ritzelpaket mit sechs Ritzeln,
- Fig. 13: eine Darstellung ähnlich der Fig. 12 für eine Kettenschaltung mit sieben Ritzeln im Ritzelpaket und
- Fig. 14: eine Übersicht über mögliche Kettenblattpakete.

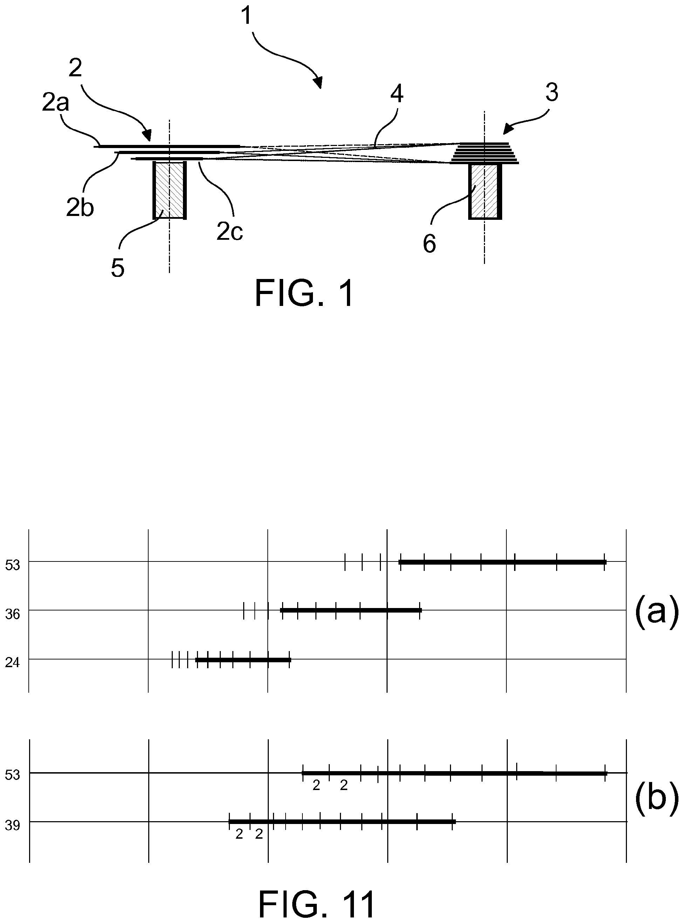

Fig. 1 zeigt schematisch eine Draufsicht auf eine Kettenschaltung 1, die ein Kettenblattpaket 2, hier umfassend drei Kettenblätter 2a, 2b und 2c in der Abstufung 45-30-20, aufweist. Dieses Kettenblattpaket 2 wird zusammen mit einem Ritzelblock 3, der in der dargestellten Ausführungsform sechs Ritzel in einer Einzahnabstufung, also z.B. mit 11 bis 16 Zähnen, hat. Über das Kettenblattpaket 2 und das Ritzelpaket 3 läuft eine Kette 4. Mittels eines nicht dargestellten Umwerfers kann die Kette 4 auf jedes Kettenblatt des Kettenblattpaketes 2 aufgelegt werden, und ein Schaltwerk verstellt die Kette am Ritzelpaket 3. Das Kettenblattpaket 2 ist mit einer Tretkurbel 5 verbunden; das Ritzelpaket 3 sitzt auf einer Nabe 6 des Hinterrades und hat eine Einzahnabstufung. Die Kettenblätter des Kettenblattpaketes haben vom größeren zum kleineren Kettenblatt jeweils eine Reduktion auf 2/3.

Die Abstimmung von Ritzelpaket 3 und Kettenblattpaket 2 gewährleistet, dass jedes Kettenblatt jedes Ritzel anspricht, d. h. jede Kombination von Ritzel am Ritzelpaket 3 und Kettenblatt an Kettenblattpaket 2 ist mit der Kettenschaltung 1 fahrbar, ohne dass ein Schleifen am Werfer etc. auftritt.

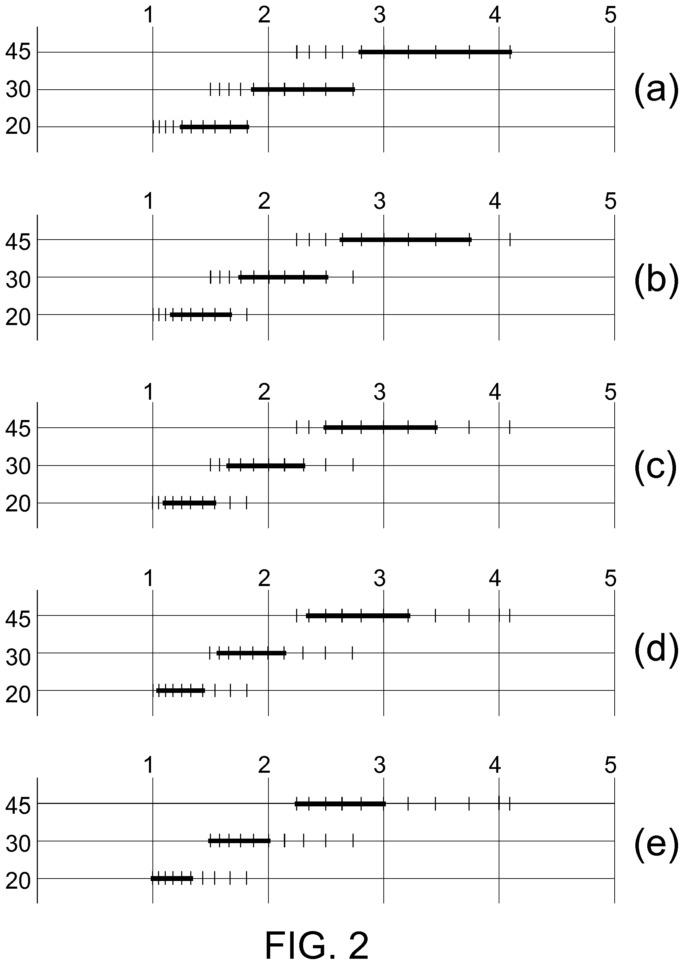

Fig. 2 zeigt eine Übersicht über die möglichen Entfaltungsbereiche und damit die Gangabstufungen, die mit der Kombination aus Dreifach-Kettenblatt und Ritzelpaket für das erwähnte Kettenblattpaket 45-30-20 möglich ist. Fig. 2(a) zeigt dabei die in Fig. 1 dargestellte Kombination mit einem 6er-Ritzelpaket mit 11-16 Ritzeln. Fig. 2(a) gilt für ein Ritzelpaket, dessen kleinstes Ritzel 11 Zähne hat, in Fig. 2(b) sind es 12, in Fig. 2(c) 13, in Fig. 2(d) 14 und in Fig. 2(e) 15 Zähne. Die Abstufung 1 : 2/3 ist realisiert durch eine Reduktion von 45 auf 30 und von 30 auf 20 Zähne. Die Darstellungen der Fig. 2(a) - (e) zeigen jeweils für die Kettenblätter des Kettenblattpaketes die Entfaltung mit dem jeweiligen Ritzel des Ritzelpaketes. Auf der horizontalen Achse ist die Entfaltung, d. h. das Übersetzungsverhältnis aufgetragen. Wie Fig. 2(a) deutlich zeigt, überlagern sich die Entfaltungsbereiche nicht.

Schaltet man gedanklich in der Ausführungsform der Fig. 2(a) vom kleinsten bis zum größten Gang durch, beginnt man bei der Kombination 20/16 (in üblicher Notation wird vor dem Schrägstrich die Zahnzahl des Kettenblattes und nach dem Schrägstrich die Zahnzahl des Ritzels angegeben). Nun kann am Ritzelpaket bis zum kleinsten Ritzel mit 11 Zähnen durchgeschaltet werden, also bis zur Kombination 20/11. Mit dem Wechsel auf das mittlere Kettenblatt wird gleichzeitig am Ritzelpaket auf das größte Ritzel geschaltet, so dass der nächste Gang die Kombination 30/16 ist. Nun wird wieder bis zum kleinsten Ritzel durchgeschaltet, also bis zur Kombination 30/11. Der Wechsel auf das große Kettenblatt geht einher mit einem Wechsel auf das größte Ritzel des Ritzelpaketes. Es schließt also die Kombination 45/16 an, so dass dann wieder bis auf 45/11 die Gänge hinaufgeschaltet werden. Die Lücken zwischen den Kettenblattwechseln, d. h. die Lücken zwischen 20/11 und 30/16 sowie zwischen 30/11 und 45/16 entsprechen im Wesentlichen den Lücken zum jeweils niederen oder höheren Gang. Somit sind die Gänge gleichmäßig über die gesamte Spreizung der Entfaltung verteilt, und es gibt keinen Gangüberlapp. Die Effizienz der Schaltung beträgt in diesem Fall 100%, da für jedes Kettenblatt alle Gänge fahrbar sind und kein Gang im Überlappbereich mit Gängen eines anderen Kettenblattes liegt.

Fig. 2(b) zeigt den ähnlichen Durchlauf, nun jedoch für ein Ritzelpaket, dessen kleinstes Ritzel 12 Zähne hat. Analog zeigen die Figuren 2(c) - (e) Entfaltungen für 6er-Ritzelpakete, deren kleinste Ritzel 13, 14 bzw. 15 Zähne haben.

In die Fig. 2(a) - (e) sind exemplarisch noch Entfaltungen als senkrechte Striche eingetragen die außerhalb der durchgezogenen Linien liegen, welche den mit der geschilderten Schaltung erreichbaren Entfaltungsbereich zeigen. Diese senkrechten Striche entsprechen den Entfaltungen für eine größere Anzahl an Ritzeln im Ritzelpaket.

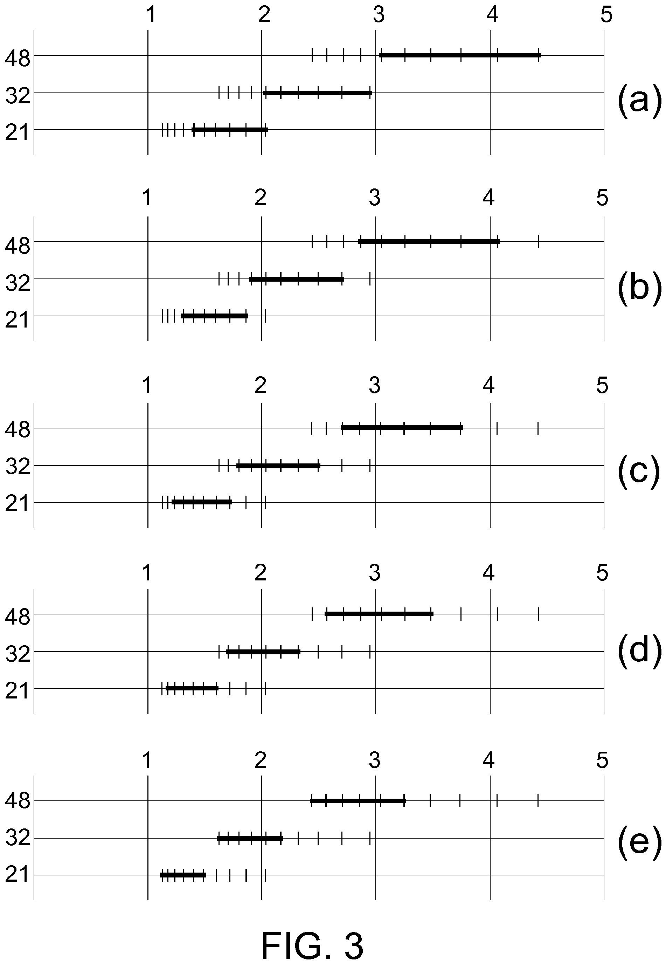

Fig. 3(a) - (e) zeigen Darstellungen ähnlich den Fig. 2(a) - (e), nun jedoch für die Kettenblattkombination 48-32-21; die Ritzelpakete entsprechen denen der Fig. 2. Durch die größeren Kettenblätter beginnt der Entfaltungsbereich bei höheren Entfaltungen. Die Kettenblattkombination entspricht somit einem leistungsorientierteren Fahrer. Die Effizienz beträgt in den Kombinationen gemäß Fig. 3(c) - (e) wiederum 100 %, da es keine Gangdoppelungen gibt. In den Kombinationen gemäß Fig. 3(a) und 3(b) sind jeweils zwei Gänge identisch oder nahezu identisch. Es handelt sich hier um die Kombination kleinstes Kettenblatt/kleinstes Ritzel und mittleres Kettenblatt/größtes Ritzel. Die Effizienz dieser Schaltung beträgt dennoch 94 %.

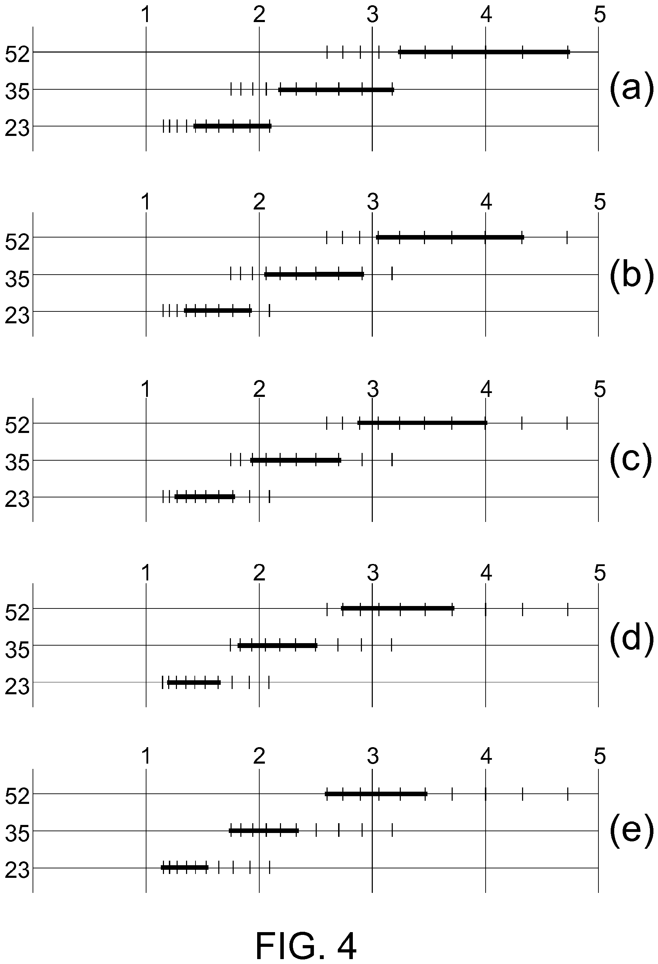

Die Fig. 4(a) - (e) zeigen eine Darstellung ähnlich der Fig. 2(a) - (e) und 3(a) - (e) nun jedoch für ein Kettenblattpaket mit der Abstufung 52-35-23.

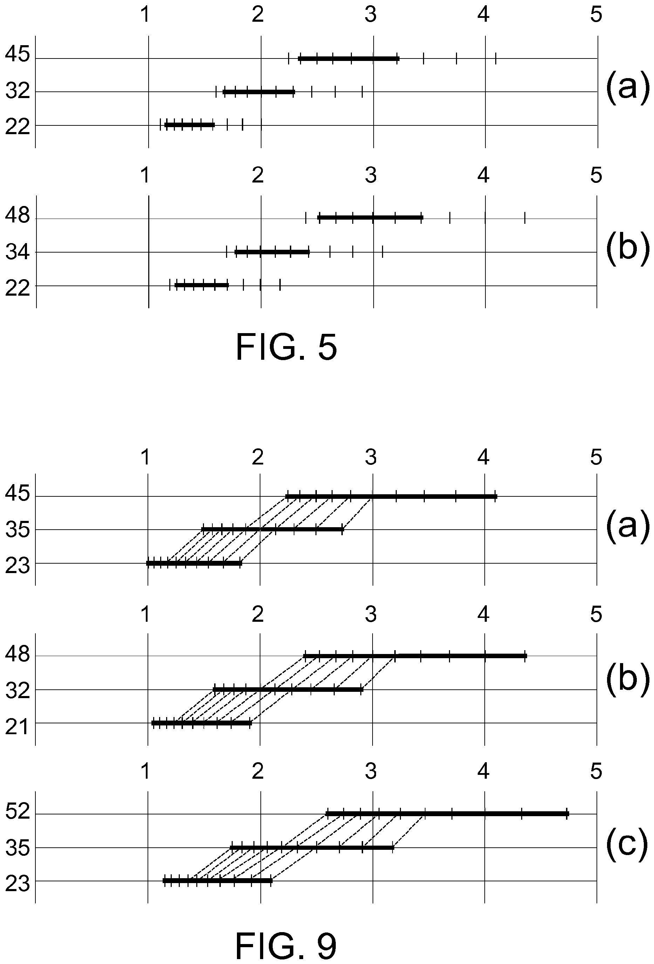

Fig. 5(a) und (b) zeigen Darstellungen entsprechend den Fig. 2(d) und 3(d). Abweichend von den dort verwendeten Kettenblattkombinationen sind hier das mittlere und kleinere Kettenblatt jeweils mit einer um zwei Zähne größeren Zahnzahl ausgestattet. Dies liegt im erfindungsgemäßen Toleranzbereich von ± 7 % für das Übersetzungsverhältnis 1 : 2/3 / 4/9, ergab sich jedoch nicht durch Rundung auf ganze Zähne, sondern erfolgte um die Lücken zwischen den Entfaltungen der Kettenblätter geringer zu gestalten. Die Kettenblattkombinationen 35-32-22 und 48-34-22 kommen somit einem weniger sportlich orientierten Fahrer entgegen. Die angegebenen Fehlerbereiche für das Übersetzungsverhältnis des Getriebes zur stufenweisen Verstellung des Übersetzungsverhältnisses können also auch für individuelle Anpassungen ausgenutzt werden. Der erfindungsgemäße Vorteil bleibt gleichermaßen erhalten.

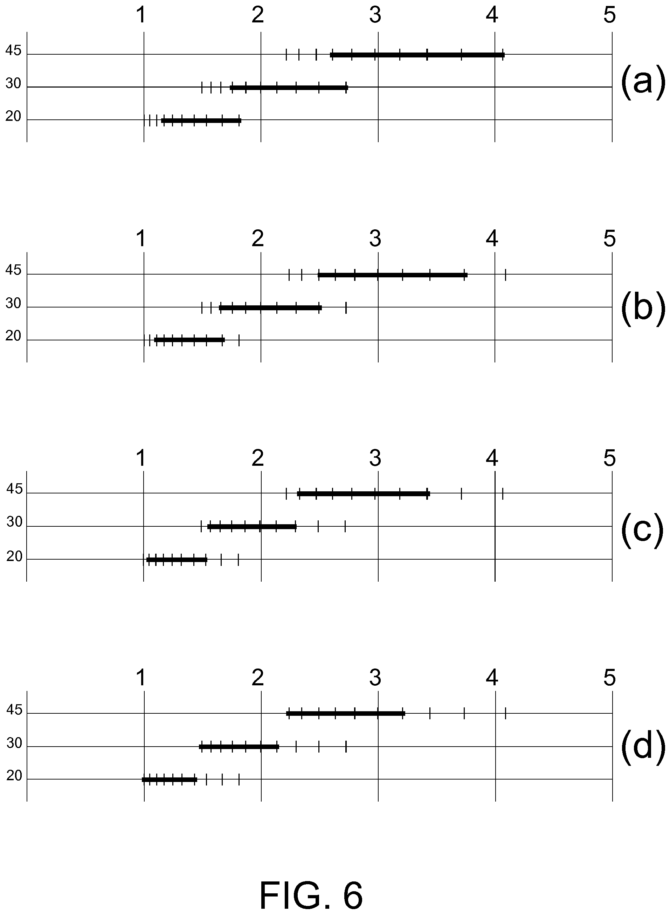

Die Fig. 6(a) - (d) zeigen Darstellung ähnlich der Fig. 2(a) - (e), nun jedoch für ein 7er-Ritzelpaket und mit einem Kettenblattpaket der Kombination 45-30-20. Das Ritzelpaket hat Fig.6(a) 11-17, in Fig. 6(b) 12-18, in Fig. 6(c) 13-19 und in Fig. 6(d) 14-20 Zähne. Beim Ritzelpaket, dessen kleinstes Ritzel 11 Zähne hat, liegt beim Übergang der Kettenblätter jeweils ein Gang im Überlappbereich, was zu einer Effizienz von (3*7-2)/(3*7) = 90% führt. Mit zunehmender Ritzelzahl des kleinsten Ritzels im Ritzelpaket rücken die den einzelnen Kettenblättern zugeordneten Entfaltungsbereiche weiter auseinander, so dass ab einem Ritzelpaket, dessen kleinstes Ritzel 13 Zähne hat, die Effizienz 100 % beträgt.

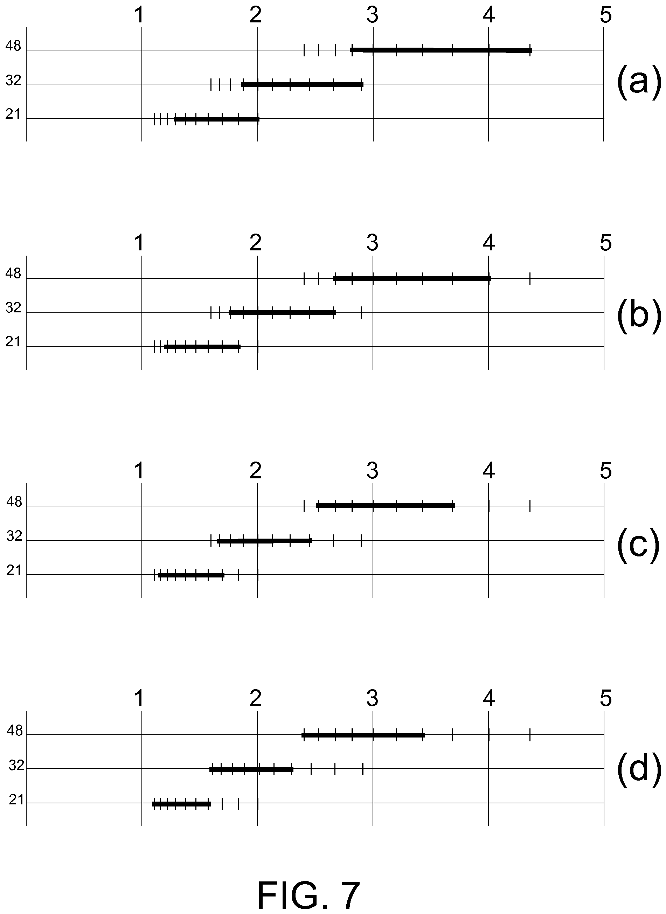

Die Fig. 7(a) - (d) zeigen eine Darstellung ähnlich der Fig. 6(a) - (d), nun jedoch für ein Kettenblattpaket der Kombination 48-32-21. Die Ritzelpakete entsprechen denen der Fig. 6. Die Effizienz beträgt für Ritzelpakete, deren kleinstes Ritzel 11 oder 12 Ritzel beträgt, wiederum 90 %. Für die anderen Ausführungsformen 100 %.

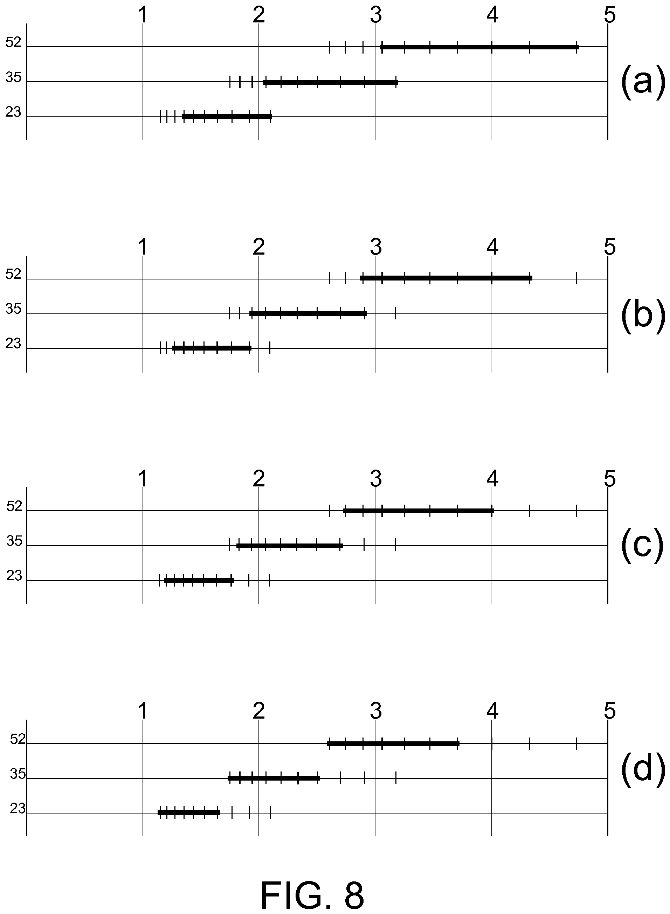

Die Fig. 8(a) - (d) zeigen eine Darstellung ähnlich der Fig. 7(a) - (d), nun jedoch für eine Kettenblattkombination 52-35-23. Die Ritzelpakete entsprechen denen der Fig. 6. Für Schaltungen, deren kleinstes Ritzel im Ritzelpaket 14 oder mehr Zähne hat, ist die Effizienz 100%.

Fig. 9 zeigt für ein Ritzelpaket mit zehn Ritzeln von 11 bis 20 Zähnen die Entfaltung für drei Kettenblattkombinationen 48-35-23, 48-32-21 und 52-35-23. Wie zu sehen ist, ergibt sich ein Überlappungsbereich dadurch, dass beim jeweiligen größeren Kettenblatt die vier größten Ritzel des Ritzelpaketes eine Entfaltung haben, die auch mit dem jeweiligen kleineren Kettenblatt mit den drei kleinsten Ritzeln des Ritzelpaketes abgedeckt werden kann. Diese auf den ersten Blick unnötige Dopplung erlaubt einen Wechsel zwischen leistungsorientierter und eher geruhsameren Fahrweise. Nutzt man den Überlappungsbereich jeweils mit dem größeren Kettenblatt und den kleineren Ritzeln, ist eine engere Abstufung der Gänge erreicht, als wenn der Überlappungsbereich mit dem kleineren Kettenblatt und den größeren Ritzeln abgedeckt wird. Ein leistungsorientierter Fahrer wird deshalb die Kettenblätter bis zum kleinsten Ritzel ausfahren und erst dann auf das größere Kettenblatt und dort beispielsweise auf das fünftgrößte Ritzel umschalten. Ein Freizeitradler wird dagegen nach dem siebtgrößten Ritzel heraufschalten, indem er auf das größere Kettenblatt und das kleinste Ritzel wechselt. So hat er eine feinere Abstufung der Gänge, und kann besonders kraftsparend fahren. Diese breite Anwendbarkeit macht ein Ritzelpaket mit zehn Ritzeln von 11 bis 20 Zähne besonders vorteilhaft.

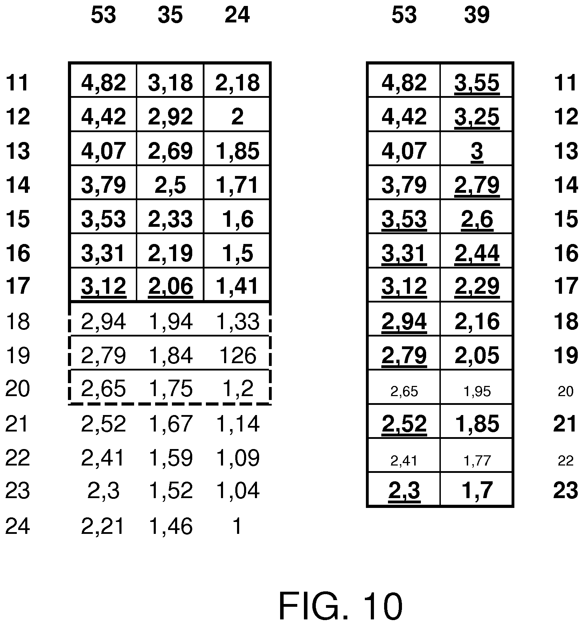

In Fig. 10 sind die Entfaltungswerte für eine Schaltung mit der Kettenblattkombination 53-36-24 und einem 7er-Ritzelpaket gegenübergestellt der in Rennsportbereich üblichen Schaltungskombination 53-39 mit einem 11er-Ritzelpaket von 11 bis 23 Zähnen, in dem die Zahnzahlen 20 und 22 nicht vorhanden sind. In den Darstellungen sind die Spalten mit der Zahnzahl des jeweiligen Kettenblattes überschrieben, und die einzelnen Zeilen sind den Ritzelzahlen des Ritzelpakets zugeordnet. Im linken Teil der Darstellung ist die erfindungsgemäße Schaltung, im rechten Teil die Schaltung nach dem Stand der Technik tabellarisch dargestellt. Wie zu sehen ist, hat der größte Gang der erfindungsgemäßen Schaltung eine Entfaltung von 4,82, wie die Schaltung nach dem Stand der Technik. Die kleinste Entfaltung, gegeben durch die Kombination 24/17 der erfindungsgemäßen Schaltung ist mit 1,4 kleiner, als die der Schaltung nach dem Stand der Technik, die mit einer Kombination 39/23 nur eine Entfaltung von 1,7 erreicht. Gleichzeitig ist der Bereich, in dem Gänge der Schaltung nach dem Stand der Technik überlappen, sehr viel größer, da nur 15 nicht im Überlappbereich liegende Kombinationen vorhanden sind. Dies führt zu einer Effizienz von nur 68 %. Bei der erfindungsgemäßen Schaltung sind hingegen 19 von 21 möglichen Kombinationen nicht im Überlappbereich anderer Kombinationen, d. h. im Bereich zwischen zwei Kombinationen auf einem anderen Kettenblatt. Die Effizienz liegt damit bei 90 %. Zugleich sind große Lücken, wie sie der Stand der Technik beispielsweise zwischen der Kombination 39/19 und 39/21 bzw. 39/21 und 39/23 hat, bei der Erfindung nicht vorhanden. Hier sind die Gänge gleichförmig abgestuft. Die Schaltvorgänge sind nicht nur überschaubar und leicht verständlich, die Abstufung zieht auf großem, mittlerem und kleinem Blatt keine Last- oder Frequenzwechsel durch Schaltlöcher nach sich. Eine gleichmäßige Kraftentfaltung ist die Folge.

Die Fig. 11(a) - (b) veranschaulichen in der Darstellungsweise der Fig. 2(a) - (e) die Unterschiede, die in Fig. 10 aus den Entfaltungswerten erkennbar waren. Die obere Darstellung zeigt den Entfaltungsbereich, der im linken Teil der Fig. 10 dargestellt wurde, die untere Darstellung den Entfaltungsbereich des Standes der Technik, der im rechten Teil der Fig. 10 gezeigt war. Man sieht den großen Überlapp zwischen den einzelnen Entfaltungsbereichen. Dies führt dazu, dass ein Fahrer entweder eine sehr große Abstufung zwischen den einzelnen Gängen auf einem gegebenen Kettenblatt in Kauf nehmen muss, oder ständig zwischen den beiden Kettenblättern umschalten muss, da ab dem fünften unteren Gang bis hin zu dem vierten oberen Gang ein ständiger Wechsel zwischen großem und kleinen Kettenblatt erforderlich ist, um die Gänge durchzuschalten. Eine derartige Schaltmimik ist für normale Fahrer so gut wie nicht verständlich, für Profis stellt sie unter der von ihnen verlangten, enormen körperlichen Belastung eine beträchtliche Konzentrationsaufgabe dar. Es sind deshalb im Stand der Technik elektronische Ansteuerungen von Schaltwerk und Umwerfer bekannt, welche die komplizierte Schaltmimik abbilden. Eine elektronische Ansteuerung ist nicht nur aufwendig und teuer, sondern auch fehlerträchtig. Die Erfindung vermeidet diese Nachteile vollständig und kombiniert einen einfachen Aufbau mit vorteilhafter Bedienbarkeit und Ergonomie.

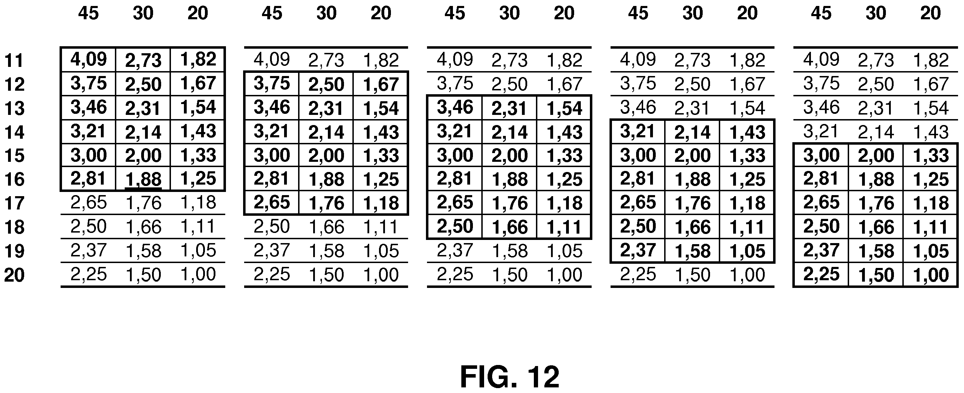

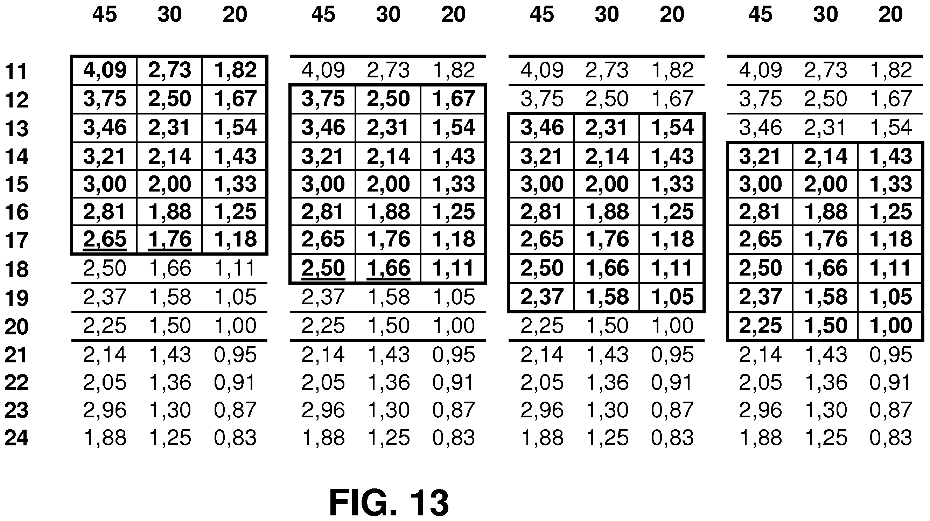

Fig. 12 zeigt verschiedene Entfaltungswerte in Form einer Tabelle, wie sie bereits in ihrer Grundstruktur in der Fig. 8 vorgestellt wurde. Der umrandete Kasten zeigt in jeder Tabelle die Entfaltungswerte für ein 6-fach Ritzelpaket beginnend mit 11 (linke Darstellung), 12 (zweite Darstellung von links), 13 (mittlere Darstellung) 14 (zweite Darstellung von rechts) und 15 (rechte Darstellung) Zähnen für das kleinste Ritzel des Ritzelpaketes. Das Kettenblattpaket hat jeweils 45-30-20. Damit zeigt die Fig. 12 die Zahlenwerte, die der Entfaltungsdarstellung der Fig. 2(a) - (e) zugrunde liegen. Aus der Figur ist auch zu ersehen, wie sich eine Ausdehnung der Zahnzahl am Ritzelpaket auswirkt. Weiter ist ebenfalls zu erkennen, dass bei einem 6er-Ritzelpaket die Entfaltungszahlen der jeweiligen Kettenblätter überlappfrei aneinander anschließen. Fig. 13 zeigt dieselbe Darstellung wie Fig. 12, nun jedoch mit Umrandung des Bereiches für ein 7er-Ritzelpaket.

Durch eine absolut größere Spreizung des Kettenblattpaketes (die relative Spreizung zwischen benachbarten Kettenblättern beträgt jeweils 1 : 2/3), werden in der Darstellungsform des Entfaltungsbereiches gemäß Fig. 2(a) - (e) die Entfaltungsbereiche für die einzelnen Kettenblätter auf der x-Achse weiter auseinandergeschoben. Dies führt dazu, dass bei großen absoluten Unterschieden zwischen den einzelnen Kettenblättern Lücken zwischen den Entfaltungsbereichen der einzelnen Kettenblätter entstehen könnten. Es ist deshalb besonders für sportliche Fahrer, die vergleichsweise große Kettenblätter in der Kettenblattgarnitur fahren wollen, bevorzugt, sieben oder mehr Ritzel im Ritzelpaket vorzusehen, alle natürlich in Einzahnabstufung.

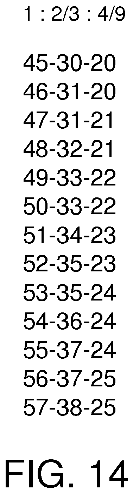

Fig. 14 listet mögliche Kombinationen für die Kettenblätter 2a, 2b, 2c der Fig. 1 auf. Natürlich können die Kettenblattkombinationen mit Ritzelpaketen verwendet werden, die sieben, acht, neun, zehn oder elf Ritzel in Einzahnabstufung haben. Die Kettenblattkombinationen der Fig. 14 folgen der geschilderten Abstufung von 1 : 2/3 von einem kleineren gegenüber einem größeren Kettenblatt. Schon weil nur ganze Zahnzahlen möglich sind, können einzelne Kombinationen durch Rundungsfehler bedingte Abweichungen von diesem Verhältnis von bis zu ± 7 % haben.

## Patentansprüche

1. Fahrrad-Kettenschaltung zur Kraftübertragung zwischen Tretkurbel und Hinterrad eines Fahrrades mit stufenweise einstellbarem Übersetzungsverhältnis, wobei die Kettenschaltung ein Ritzelpaket (3) für das Hinterrad und ein Getriebe (2) zur stufenweisen Verstellung des Übersetzungsverhältnisses umfasst, **dadurch gekennzeichnet, dass** das Ritzelpaket (3) mindestens sechs Ritzel aufweist, wobei alle Ritzel des Ritzelpakets (3) in einer Einzahnabstufung vorgesehen sind, und das Getriebe (2) eine erste, eine zweite und eine dritte Stufe (2a, 2b, 2c) aufweist, wobei die zweite Stufe gegenüber der ersten Stufe eine Reduktion auf 2/3 ± 7% bewirkt und die dritte Stufe (2c) gegenüber der zweiten Stufe (2b) nochmals eine Reduktion auf 2/3 ± 7% bewirkt, so dass die erste Stufe (2a) zur zweiten Stufe (2b) zur dritten Stufe (2c) im Verhältnis 1 : 2/3 : 4/9 stehen, jeweils ± 7%, bevorzugt ± 3%.

2. Fahrrad-Kettenschaltung nach Anspruch 1, **dadurch gekennzeichnet, dass** das Getriebe zur stufenweisen Verstellung des Übersetzungsverhältnisses eine Tretlagerschaltung oder eine Nabenschaltung ist.

3. Fahrrad-Kettenschaltung nach einem der obigen Ansprüche, **dadurch gekennzeichnet, dass** das Getriebe zur stufenweisen Verstellung des Übersetzungsverhältnisses ein mit der Tretkurbel verbundenes Kettenblattpaket (2) aufweist.

4. Fahrrad-Kettenschaltung nach Anspruch 3, **dadurch gekennzeichnet, dass** das Kettenblattpaket (2) aus folgender Liste von Zahnzahlen ausgewählt ist: 45-30-20, 46-31-20, 47-31-21, 48-32-21, 49-33-22, 50-33-22, 51-34-23, 52-35-23, 53-35-24, 54-36-24, 55-37-24, 56-37-25, 57-38-25, wobei das Kettenblattpaket (2) drei Kettenblätter (2a, 2b, 2c) mit aufeinanderfolgenden Zahnzahlen eines Elementes der Liste hat.

5. Fahrrad-Kettenschaltung nach einem der obigen Ansprüche, **dadurch gekennzeichnet, dass** das Ritzelpaket (3) sieben, acht, neun, zehn oder elf Ritzel hat.

6. Fahrrad-Kettenschaltung nach einem der obigen Ansprüche, **dadurch gekennzeichnet, dass** das kleinste Ritzel des Ritzelpakets (3) 11 oder 12 Zähne hat.

7. Fahrrad-Kettenschaltung nach einem der obigen Ansprüche, **dadurch gekennzeichnet, dass** das Ritzelpaket (3) elf Ritzel hat, wobei das kleinste Ritzel 11 und das größte Ritzel 21 Zähne hat.

8. Fahrrad-Kettenschaltung nach einem der obigen Ansprüche, **dadurch gekennzeichnet, dass** am Hinterrad ein indexiertes Schaltwerk angeordnet ist, wobei die Zahl der Indexstufen größer ist als die Zahl der Ritzel im Ritzelpaket (3).

## Claims

1. A bicycle derailleur gears for transmitting power between a crank and a rear wheel of a bicycle with an incrementally adjustable gear transmission ratio, wherein the derailleur gears comprise a cogset (3) for the rear wheel and a gearing mechanism (2) for incremental adjustment of the transmission ratio, **characterized in that** the cogset (3) comprises at least 6 sprockets, wherein all sprockets of the cogset (3) comprise one teeth increments, and the gearing mechanism (2) comprises at least a first, second and a third stage (2a, 2b, 2c), wherein the second gear effects a reduction of 2/3 ± 7% over the first stage, and the third stage (2c) effects a further reduction of 2/3 ± 7% over the second stage (2b), so that the first stage (2a) to the second stage (2b) and to the third stage (2c) have a ratio of 1 : 2/3 : 4/9, ± 7%, in particular ± 3%.

2. The bicycle derailleur of claim 1, **characterized in that** the gearing mechanism for the incremental adjustment is either a bottom bracket gear box or a hub gear.

3. The bicycle derailleur of any of the above claims, **characterized in that** the gearing mechanism for the incremental adjustment comprises a chainring package (2) connected to a crankset.

4. The bicycle derailleur of claim 3, **characterized in that** the chainring package (2) is chosen from the following list of teeth numbers: 45-30-20, 46-31-20, 47-31-21, 48-32-21, 49-33-22, 50-33-22, 51-34-23, 52-35-23, 53-35-24, 54-36-24, 55-37-24, 56-37-25, 57-38-25, the chainring package (2) having three chainrings (2a, 2b, 2c) with succeeding teeth numbers of that list.

5. The bicycle derailleur of any of the above claims, **characterized in that** the cogset (3) has seven, eight, nine, ten or eleven sprockets.

6. The bicycle derailleur of any of the above claims, **characterized in that** the smallest sprocket of the cogset (3) has 11 or 12 teeth.

7. The bicycle derailleur of any of the above claims, **characterized in that** the cogset (3) has eleven sprockets, with the smallest sprocket having 11 and the largest sprocket having 21 teeth.

8. The bicycle derailleur of any of the above claims, **characterized in that** an indexed rear derailleur is provided at the rear wheel, the number of index stages being bigger than the number of sprockets at the sprocket cassette (3).

## Revendications

1. Dérailleur de bicyclette pour la transmission de force entre le pédalier et la roue arrière d'une bicyclette avec un rapport de multiplication réglable en continu, dans lequel le dérailleur comprend un paquet de pignons (3) pour la roue arrière et un changement de vitesse (2) pour le déplacement échelonné du rapport de multiplication, **caractérisé en ce que** le paquet de pignons (3) présente au moins six pignons, dans lequel tous les pignons du paquet de pignons (3) sont prévus avec une différence d'une dent, et le changement de vitesse (2) présente un premier, un deuxième et un troisième plateaux (2a, 2b, 2c), dans lequel le deuxième plateau opère par rapport au premier plateau un réduction de 2/3 ± 7 % et le troisième plateau (2c) opère encore par rapport au deuxième plateau (2b) une réduction de 2/3 ± 7 %, de telle manière que le premier plateau (2a) par rapport au deuxième plateau (2b) par rapport au troisième plateau (2c) se trouvent dans le rapport 1 : 2/3 : 4/9, respectivement ± 7%, de préférence ± 3 %.

2. Dérailleur de bicyclette selon la revendication 1, **caractérisé en ce que** le changement de vitesse destiné au déplacement échelonné du rapport de multiplication est une transmission intégrée au pédalier ou une transmission intégrée au moyeu.

3. Dérailleur de bicyclette selon l'une quelconque des revendications précédentes, **caractérisé en ce que** le changement de vitesse destiné au déplacement échelonné du rapport de multiplication présente un paquet de plateaux (2) assemblé au pédalier.

4. Dérailleur de bicyclette selon la revendication 3, **caractérisé en ce que** le paquet de plateaux (2) est sélectionné parmi la liste suivante de nombres de dents: 45-30-20, 46-31-20, 47-31-21, 48-32-21, 49-33-22, 50-33-22, 51-34-23, 52-35-23, 53-35-24, 54-36-24, 55-37-24, 56-37-25, 57-38-25, dans lequel le paquet de plateaux (2) comprend trois plateaux (2a, 2b, 2c) avec des nombres de dents successifs d'un élément de la liste.

5. Dérailleur de bicyclette selon l'une quelconque des revendications précédentes, **caractérisé en ce que** le paquet de pignons (3) comprend sept, huit, neuf, dix ou onze pignons.

6. Dérailleur de bicyclette selon l'une quelconque des revendications précédentes, **caractérisé en ce que** le plus petit pignon du paquet de pignons (3) comporte 11 ou 12 dents.

7. Dérailleur de bicyclette selon l'une quelconque des revendications précédentes, **caractérisé en ce que** le paquet de pignons (3) comprend onze pignons, dans lequel le plus petit pignon comporte 11 dents et le plus grand pignon 21 dents.

8. Dérailleur de bicyclette selon l'une quelconque des revendications précédentes, **caractérisé en ce qu'**un dérailleur arrière indexé est disposé sur la roue arrière, dans lequel le nombre des pas d'indexation est plus grand que le nombre des pignons dans le paquet de pignons (3).
